(19) Europäisches Patentamt
European Patent Office
Office européen des brevets

(11) Veröffentlichungsnummer : **0 043 978**
**B1**

(12) **EUROPÄISCHE PATENTSCHRIFT**

(45) Veröffentlichungstag der Patentschrift : **24.08.83**

(51) Int. Cl.³ : **C 07 F 9/40**, C 07 F 9/65, A 01 N 57/18

(21) Anmeldenummer : **81105051.7**

(22) Anmeldetag : **30.06.81**

# (54) N-Phosphonylcarbonyl-Carbamate, Verfahren zu ihrer Herstellung, diese Verbindungen enthaltende Schädlingsbekämpfungsmittel und ihre Verwendung zur Schädlingsbekämpfung.

(30) Priorität : **11.07.80 DE 3026326**

(43) Veröffentlichungstag der Anmeldung : **20.01.82 Patentblatt 82/03**

(45) Bekanntmachung des Hinweises auf die Patenterteilung : **24.08.83 Patentblatt 83/34**

(84) Benannte Vertragsstaaten : **AT BE CH DE FR GB IT LI NL SE**

(56) Entgegenhaltungen :
**DE A 2 132 936**
**DE A 2 142 496**
**DE A 2 804 664**
**US A 4 043 794**

**JOURNAL OF AGRICULTURAL AND FOOD, CHEMISTRY, Band 18, Nr. 5, (1970), auteur M.A.H. FAHMY et al. : « The selective toxicity of new N-phosphorothioylcarbamate esters » Seiten 793-796**

(73) Patentinhaber : **BAYER AG**
**Zentralbereich Patente, Marken und Lizenzen**
**D-5090 Leverkusen 1, Bayerwerk (DE)**

(72) Erfinder : **Heywang, Gerhard, Dr.**
**Nittumer Weg 4**
**D-5060 Bergisch-Gladbach 2 (DE)**
Erfinder : **Kühle, Engelbert, Dr.**
**von-Bodelschwingh-Strasse 42**
**D-5060 Bergisch-Gladbach 2 (DE)**
Erfinder : **Hammann, Ingeborg, Dr.**
**Belfortstrasse 9**
**D-5000 Köln 1 (DE)**
Erfinder : **Homeyer, Bernhard, Dr.**
**Obere Strasse 28**
**D-5090 Leverkusen 3 (DE)**

**EP 0 043 978 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

N-Phosphonylcarbonyl-Carbamate, Verfahren zu ihrer Herstellung, diese Verbindungen enthaltende Schädlingsbekämpfungsmittel und ihre Verwendung zur Schädlingsbekämpfung

Die vorliegende Erfindung betrifft neue N-Phosphonyl-carbonylcarbamate, Verfahren zu ihrer Herstellung, diese Verbindungen enthaltende Schädlingsbekämpfungsmittel, ihre Herstellung sowie ihre Verwendung zur Schädlingsbekämpfung, vor allem zur Bekämpfung von Arthropoden, vorzugsweise Insekten und Spinnentiere, insbesondere Insekten.

Es ist bereits bekannt geworden, daß N-carbonylierte Carbamate wie N-carboxylierte N-Methylcarbamidsäurearylester (vgl. DE-OS 21 32 936) und Chlor-carbonyl-N-methylcarbamidsäurearylester (vgl. DE-OS 21 42 496) insektizide Eigenschaften haben. Ihre Wirkung ist jedoch, vor allem bei niedrigen Aufwandmengen, nicht immer voll befriedigend.

Es wurden nun neue N-Carbonyl-N-methylcarbamidsäureester, nämlich N-Phosphonylcarbonyl-N-methylcarbamidsäureester, der Formel (I) gefunden

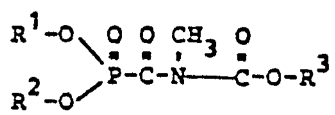

(I)

in welcher

$R^1$ und $R^2$ gleich oder verschieden sein können und für $C_1$-$C_8$-Alkyl, $C_2$-$C_6$-Alkenyl oder $C_2$-$C_6$-Alkinyl stehen, wobei diese Reste durch Halogen substituiert sein können und

$R^3$ für $C_1$-$C_8$-Alkyl, Phenyl, Naphthyl, Benzodioxolanyl, Dihydrobenzofuranyl oder Indanyl steht, wobei diese Reste durch $C_1$-$C_8$-Alkyl, $C_2$-$C_6$-Alkenyl, $C_2$-$C_6$-Alkinyl, $C_1$-$C_6$-Alkoxy, $C_2$-$C_6$-Alkenoxy, $C_2$-$C_6$-Alkinoxy, $C_1$-$C_6$-Alkylthio, $C_2$-$C_6$-Alkenylthio, $C_2$-$C_6$-Alkinylthio, Dialkylamino mit 1 bis 4 C-Atomen je Alkylgruppe, $C_1$-$C_8$-Halogenalkyl, Halogen, Nitro, Cyano, $C_3$-$C_7$-Cycloalkyl, Formamidiono, Dioxanyl und/oder Dioxolanyl substituiert sein können oder $R^3$ für einen Rest der Formel Ia steht

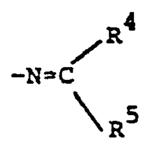

(Ia)

in welcher

$R^4$ und $R^5$ gleich oder verschieden sein können, und für $C_1$-$C_8$-Alkyl, $C_1$-$C_6$-Alkoxy, $C_1$-$C_6$-Alkylthio, $C_2$-$C_4$-Alkylthioalkyl, Cyano, $C_2$-$C_6$-Alkoxycarbonyl, Dialkylcarbonyl mit 1 bis 4 C-Atomen je Alkylgruppe, Dialkoxyphosphonyl mit 1 bis 4 C-Atomen je Alkylgruppe oder Triazolyl stehen und wobei $R^4$ und $R^5$ weiterhin gemeinsam mit dem C-Atom, an welches sie gebunden sind, einen gegebenenfalls durch Methyl oder Phenyl substituierten Dithiolan-, Dithian-, Oxathiolan- oder Oxathianring bilden können.

Weiterhin wurde gefunden, daß die Verbindungen der Formel (I) zur Bekämpfung von Schädlingen, vor allem von Arthropoden, vorzugsweise von Insekten und Spinnentieren, insbesondere von Insekten verwendet werden können.

Weiterhin wurde gefunden, daß man die neuen N-Phosphonylcarbonylcarbamate der Formel (I) erhält, wenn man

a) N-Chlorcarbonyl-N-methylcarbamidsäureester der Formel II

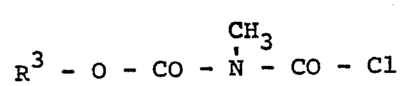

(II)

in welcher

$R^3$ die oben angegebene Bedeutung hat, mit Phosphiten der Formel (III)

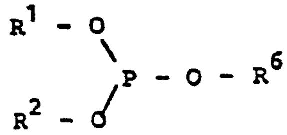

(III)

in welcher

$R^1$ und $R^2$ die oben angegebene Bedeutung haben und

$R^6$ für $C_1$-$C_8$-Alkyl, $C_2$-$C_6$-Alkenyl oder $C_2$-$C_6$-Alkinyl steht, wobei diese Gruppen durch Halogen

substituiert sein können und wobei

$R^1$, $R^2$ und $R^6$ gleich oder verschieden sein können,

gegebenenfalls in Gegenwart eines Verdünnungsmittel umsetzt, oder

b) Phosphite der Formel (III) mit Bischlor-carbonyl-N-methylamin der Formel (IV)

$$Cl - CO - \overset{CH_3}{\overset{|}{N}} - CO - Cl \qquad (IV)$$

und Hydroxylverbindungen der Formel (V)

$$R^3\text{—}OH \qquad (V)$$

in welcher

$R^3$ die oben angegebene Bedeutung hat,

gegebenenfalls in Gegenwart eines säurebindenden Mittels und/oder eines Verdünnungsmittels umsetzt.

Es ist ausgesprochen überraschend, daß die erfindungsgemäßen Verbindungen der Formel (I) günstigere Eigenschaften aufweisen als die vom Stand der Technik her bekannten N-carbonylierten Carbamate. Die erfindungsgemäßen Stoffe stellen somit eine Bereicherung der Technik dar.

Verwendet man z. B. 2,3-Dihydro-2,2-dimethyl-7-benzofuranyl-N-chlorcarbonyl-N-methyl-carbamat (Formel IV) und Triethylphosphit (Formel VII) als Ausgangsstoffe, so läßt sich der Reaktionsverlauf der Verfahrensvariante (a) durch das folgende Formelschema wiedergeben :

Formelschema 1

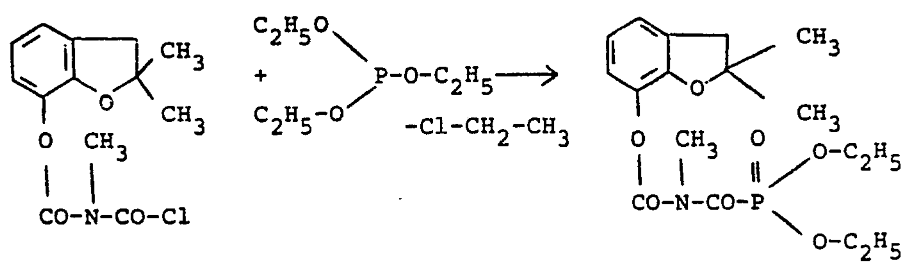


(VI) (VII)

Verwendet man z. B. 1-Methylthio-acetaloxim (Formel VIII), Bischlorcarbonyl-N-methylamin (Formel IV) und Trimethylphosphit (Formel IX) als Ausgangsstoffe, so läßt sich der Reaktionsverlauf der Verfahrensvariante (b) beispielsweise durch das folgende Reaktionsschema wiedergeben :

Formelschema 2

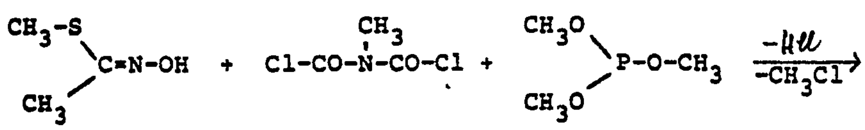


(VIII) (IV) (IX)

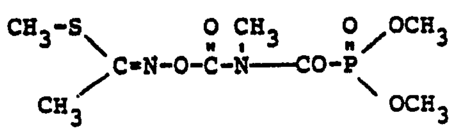

Die als Ausgangsstoffe verwendeten Phosphite, N-Chlor-carbonyl-N-methylcarbamidsäurester, Phenole, Oxime und Bischlorcarbonylmethylamin sind bekannt.

Vorzugsweise verwendet werden Phosphite der Formel (III) in denen $R^1$, $R^2$ und $R^6$ gleich sind und $R^1$, $R^2$ sowie $R^6$ für Methyl, Ethyl, 2-Chlorethyl, Octyl, Allyl, Propargyl stehen.

Wird als Ausgangsverbindungen gemäß Formel (II) N-Chlor-carbonyl-N-methylcarbamidsäureester verwendet, so steht $R^3$ vorzugsweise für einen Phenyl-, 2-Isopropylphenyl-, 3-Isopropylphenyl-, 2-Isopropoxyphenyl-, 3,5-Dimethyl-4-methylmercaptophenyl-, 3-Methyl-4-dimethylaminophenyl-, 4-Nitrophenyl-, 2-Allyloxyphenyl-, 3-sek.-Butyl-4-methylphenyl-, 4-Methyl-3-isopropylphenyl-, 2-Dimethylaminophenyl-, 2-(1',3'-Dioxolanyl-(2'))-phenyl-, 2-(4',5'-Dimethyl-1',3'-dioxolanyl-(2'))-phenyl-, 1-Naphthyl, 4-(1,1-Dimethylindanyl)-, 2,2-Dimethylbenzodioxolanyl-, 2,2-Dimethyl-2,3-dihydrobenzofuranyl-(7) oder einen Methylrest.

Werden als Ausgangsverbindungen gemäß Formel V Phenole verwendet, so steht $R^3$ vorzugsweise für einen Phenyl-, 2-Isopropylphenyl-, 3-Isopropylphenyl-, 2-Isopropoxyphenyl-, 3,5-Dimethyl-4-methylmercaptophenyl-, 3-Methyl-4-dimethylaminophenyl-, 4-Nitrophenyl-, 2-Allyloxyphenyl-, 3-sek.-Butyl-4-methylphenyl-, 4-Methyl-3-isopropylphenyl-, 2-Dimethylaminophenyl-, 2-(1',3'-Dioxolanyl-(2'))-phenyl-, 2-(4',5'-Dimethyl-1',3'-dioxolanyl-(2'))-phenyl-, 1-Naphthyl, 4-(1,1-Dimethylindanyl)-, 2,2-Dimethylbenzodioxolanyl-, 2,2-Dimethyl-2,3-dihydrobenzofuranyl-(7)-Rest.

Werden als Ausgangsverbindungen gemäß Formel V Oxime verwendet, so kommen vorzugsweise Oximino-malonsäurediethylester, 2-Oximino-1,3-dithiolan, 4-Methyl-2-oximino-1,3-dithiolan, 4,4-Dimethyl-2-oximino-1,3-dithiolan, 4-Phenyl-2-oximino-1,3-dithiolan, 2-Oximino-1,3-oxathiolan, 2-Oximino-1,3-dithian, 2-Oximino-1,3-oxathian, Hydroxamthioessigsäure-S-methylester, α-Methylmercapto-α-oximino-essigsäureethylester, α-Methylmercapto-α-oximino-N,N-dimethylacetamid, β,β-Dimethyl-α-oximino-buttersäurenitril, 2,2-Dimethyl-1-oximino-1-triazolyl-propan in Frage.

Die Definition der Reste hat in den Formeln vorzugsweise folgende Bedeutung :

Alkyl $R^1$, $R^2$, $R^3$, $R^4$, $R^5$ und $R^6$ sowie der mögliche Alkylsubstituent und Halogenalkylsubstituent von $R^3$ sind geradkettig oder verzweigt und enthalten 1 bis 8, insbesondere 1 bis 4 Kohlenstoffatomen, wobei beispielsweise Methyl, Ethyl, n- und i-Propyl, n-, i-, s- und t-Butyl genannt seien. Als Halogenalkylsubstituent von $R^3$ sei beispielhaft Halogenmethyl, vorzugsweise Trichlor und Trifluormethyl angeführt.

Alkenyl und Alkinyl $R^1$, $R^2$ und $R^6$ sowie der mögliche Alkenyl- und Alkinylsubstituent in $R^3$ sind geradkettig oder verzweigt und enthalten 2 bis 6, insbesondere 3 oder 4 Kohlenstoffatome, wobei beispielhaft Allyl und Propargyl genannt seien.

Alkoxy und Alkylthio $R^4$ und $R^5$ sowie als mögliche Substituenten in $R^3$ sind geradkettig oder verzweigt und enthalten 1 bis 6, insbesondere 1 bis 4 Kohlenstoffatome , wobei beispielhaft Methoxy und Methylthio, Ethoxy und Ethylthio, n-, i- und t-Propoxy und Propylthio genannt seien.

Alkenoxy, Alkinoxy, Alkenylthio und Alkinylthio als mögliche Substituenten in $R^3$ sind geradkettig oder verzweigt und enthalten 2 bis 6, insbesondere 2 bis 4 Kohlenstoffatome.

Dialkylamino als möglicher Substituent in $R^3$ sowie Dialkoxyphosphonyl und Dialkylcarbamoyl $R^4$ und $R^5$ enthalten je geradkettiger oder verzweigter Alkylgruppe 1 bis 4, insbesondere 1 oder 2 Kohlenstoffatome.

Alkoxycarbonyl $R^4$ und $R^5$ enthalten 2 bis 6, insbesondere 2 bis 4 Kohlenstoffatome.

Alkylthioalkyl $R^4$ und $R^5$ sind geradkettig oder verzweigt und enthalten 2 bis 6, insbesondere 2 bis 4 Kohlenstoffatome, wobei Methylthiomethyl und Ethylthiomethyl beispielhaft genannt seien.

Cycloalkyl als möglicher Substituent in $R^3$ enthält 3 bis 7, vorzugsweise 5 oder 6 Ringkohlenstoffatome.

Halogen bedeutet jeweils Fluor, Chlor, Brom und Jod, vorzugsweise Fluor, Chlor und Brom, insbesondere Chlor und Fluor.

Substituierte Reste sind ein oder mehrfach, gleich oder verschieden substituiert. Vorzugsweise tragen sie 1 bis 5, insbesondere 1 bis 3 Substituenten.

Als Verbindungen der Formel (I) werden solche bevorzugt, in welchen

$R^1$ und $R^2$ gleich oder verschieden sein können und für geradkettiges oder verzweigtes Alkyl mit 1-8 C-Atomen, für Alkenyl mit 3 bis 6 C-Atomen oder für Alkinyl mit 3-6 C-Atomen steht, wobei $R^1$ und $R^2$ durch 1-3 Halogenatome substituiert sein können und

$R^3$ für Methyl, Phenyl, Naphthyl, Benzodioxolanyl, Dihydrobenzofuranyl oder Indanyl steht, wobei diese Reste durch Alkyl, Alkenyl, Alkinyl, Alkoxy, Alkenoxy, Alkinoxy, Alkylthio, Alkenylthio, Alkinylthio, Dialkylamino mit jeweils bis zu 4 C-Atomen, Trihalogenmethyl, Halogen, Nitro, Cyano, $C_3$-$C_7$-Cycloalkyl, Formamidino, Dioxanyl, Dioxolanyl substituiert sein können oder $R^3$ für den Rest der Formel

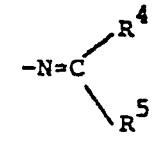

steht, in welcher

$R^4$ und $R^5$ gleich oder verschieden sein können und für Alkyl, Alkoxy oder Alkylthio mit jeweils 1 bis 4 Kohlenstoffatomen, Cyano, Alkoxycarbonyl oder Alkylthioalkyl mit 2 bis 4 Kohlenstoffatomen, Dialkylcarbamoyl oder Dialkoxyphosphonyl mit 1 bis 4 Kohlenstoffatomen je Alkylgruppe oder für Triazolyl stehen und wobei $R^4$ und $R^5$ gemeinsam mit dem C-Atom, an welches sie gebunden sind, einen gegebenenfalls durch Methyl oder Phenyl substituierten Dithiolan-, Dithian-, Oxithiolan- oder Oxathianring bilden können.

Besonders bevorzugt sind N-Phosphonylcarbonyl-N-carbamate der allgemeinen Formel (I) in der

$R^1$ und $R^2$ für Methyl, Ethyl, 2-Chlorethyl, Octyl, Allyl oder Propargyl stehen, und

$R^3$ für Methyl oder Phenyl, das gegebenenfalls durch Alkyl mit 1 bis 3 C-Atomen, Alkoxy mit 1 bis 3 C-Atomen, Methylthio, Dioxolanyl und/oder methylsubstituiertes Dioxolanyl substituiert ist, steht oder für Benzodioxolanyl oder Dihydrobenzofuranyl steht, wobei diese Reste gegebenenfalls durch Methyl substituiert sind und $R^3$ weiterhin für Naphthyl oder den Iminorest der Formel

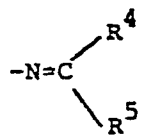

steht, worin

$R^4$ und $R^5$ für Alkyl mit 1 bis 4 C-Atomen, Alkylthioalkyl mit 2 bis 4 Kohlenstoffatomen, für Methylthio, Cyano, Dimethylaminocarbonyl oder Ethoxycarbonyl stehen oder worin $R^4$ und $R^5$ gemeinsam mit dem angrenzenden C-Atom, an welches sie gebunden sind, einen Dithiolanring bilden.

Als Verdünnungsmittel eignen sich beim erfindungsgemäßen Verfahren (Varianten (a) und (b)) praktisch alle inerten organischen Lösungsmittel. Hierzu gehören Ether wie Diethylether, Dioxan oder Tetrahydrofuran, Kohlenwasserstoffe wie Benzol oder Toluol, halogenierte Benzole wie Chlorbenzol und Dichlorbenzol, weiterhin Nitrile, Ketone und Ester sowie Gemische aus diesen Lösungsmitteln.

Wird die Synthese der neuen N-Phosphonylcarbonyl-N-methylcarbamate nach dem Formelschema 2 durchgeführt, so setzt man zur Bindung des entstehenden Chlorwasserstoffs dem Reaktionsgemisch eine für solche Reaktionen übliche geeignete Base als Säurebindemittel zu, wobei vorzugsweise eine tertiäre organische Base, wie z. B. Triethylamin oder Dimethylbenzylamin eingesetzt wird.

Die Reaktionstemperaturen können in einem größeren Bereich variiert werden. Im allgemeinen arbeitet man zwischen etwa 0 und 100 °C, vorzugsweise bei etwa 20 bis 60 °C.

Gewöhnlich werden die Reaktionspartner in äquimolaren Mengenverhältnissen eingesetzt, doch auch die Verwendung einer Komponente im Überschuß ist möglich, bringt jedoch keine wesentlichen Vorteile mit sich.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören :

Aus der Ordnung der Isopoda z. B. Oniscus asellus, Armadillidium vulgare, Porcellio scaber.

Aus der Ordnung der Diplopoda z. B. Blaniulus guttulatus.

Aus der Ordnung der Chilopoda z. B. Geophilus carpophagus, Scutigera spec.

Aus der Ordnung der Symphyla z. B. Scutigerella immaculata.

Aus der Ordnung der Thysanura z. B. Lepisma saccharina.

Aus der Ordnung der Collembola z. B. Onychiurus armatus.

Aus der Ordnung der Orthoptera z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z. B. Forficula auricularia.

Aus der Ordnung der Isoptera z. B. Reticulitermes spp.

Aus der Ordnung der Anoplura z. B. Phylloxera vastatrix, Pemphigus spp., Pediculus humanus corporis, Haematopinus spp., Linognathus spp.

Aus der Ordnung der Mallophaga z. B. Trichodectes spp., Damalinea spp.

Aus der Ordnung der Thysanoptera z. B. Hercinothrips femoralis, Thrips tabaci.

Aus der Ordnung der Heteroptera z. B. Eurygaster spp., Dysdercus intermedius, Piesma quadrata, Cimex lectularius, Rhodnius prolixus, Triatoma spp.

Aus der Ordnung der Homoptera z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z. B. Anobium punctatum, Rhizopertha dominica, Bruchidius obtectus, Acanthoscelides obtectus, Hylotrupes bajulus, Agelastica alni, Leptinotasa decemlineata,

Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z. B. Diprion spp., Hoplocampa spp., Lasius spp., Monomorium pharaonis, Vespa spp.

Aus der Ordnung der Diptera z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z. B. Xenopsylla cheopis, Ceratophyllus spp.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. a., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage : Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser ; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid ; als feste Trägerstoffe kommen in Frage : z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate kommen in Frage ; z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel ; als Emulgier- und/oder schaumerzeugende Mittel kommen in Frage : z. B. nichtionogene und anionische Emulgatoren, wie Polyoxyäthylen-Fettsäure-Ester, Polyoxyäthylen-Fettalkohol-Äther, z. B. Alkylarylpolyglykol-äther, Alkylsulfonate, Alkylsulfate, Arylsulfonate sowie Eiweißhydrolysate ; als Dispergiermittel kommen in Frage : z. B. Lignin-Sulfitablaugen und Methylcellulose.

Es können in den Formulierungen Haftmittel wie Carboxymethylcellulose, natürliche und synthetische pulverige, körnige und latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u. a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,000 000 1 bis zu 100 Gew.-% Wirkstoff, vorzugsweise zwischen 0,000 1 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine

hervorragende Residualwirkung auf Holz und Ton sowie durch eine gute Alkalistabilität auf gekälkten Unterlagen aus.

Die erfindungsgemäßen Wirkstoffe eignen sich auch zur Bekämpfung von Ektoparasiten, wobei die Anwendung der erfindungsgemäßen Wirkstoffe in bekannter Weise erfolgt.

Die Wirksamkeit der erfindungsgemäßen Verbindungen sei anhand der folgenden Beispiele erläutert :

## Beispiel A

Myzus-Test

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Blattläuse abgetötet wurden ; 0 % bedeutet, daß keine Blattläuse abgetötet wurden.

Bei diesem Test zeigen z. B. die Verbindungen der Beispiele 1 bis 6, 10 und 11 sowie 15 und 16 bei Versuchen mit einer Konzentration von 0,01 % einen Abtötungsgrad zwischen 70 und 100 %.

## Beispiele B und C

Grenzkonzentrationstest/Bodeninsekten

1) Testinsekt : Phorbia antiqua-Maden im Boden
2) Testinsekt : Tenebrio molitor-Larven im Boden

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

1) Bei Tests mit Phorbia antiqua-Maden im Boden ergaben z. B. die Verbindungen der Beispiele 3 und 11 bei einem Versuch bei einer Konzentration von 2,5 ppm einen Abtötungsgrad von 100 %.

2) Bei Tests mit Tenebrio molitor-Larven im Boden ergaben z. B. die Verbindungen der Beispiele 2, 7 und 10 bei einem Versuch mit einer Konzentration von 20 ppm einen Abtötungsgrad von 100 %.

## Beispiele D und E

Grenzkonzentrations-Test/Wurzelsystemische Wirkung

1) Testinsekt : Phaedon cochleariae-Larven
2) Testinsekt : Myzus persicae

Lösungsmittel : 3 Gewichtsteile Aceton
Emulgator : 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge

pro Volumeneinheit Boden, welche in ppm (= mg/l) angegeben Wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effekts werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

1) Bei Test mit Phaedon cochleariae-Larven ergaben z. B. die Verbindungen der Beispiele 2, 3, 5 und 6 bei einem Versuch mit einer Konzentration von 10 ppm einen Abtötungsgrad von 100 %.

2) Bei Tests mit Myzus persicae ergab z. B. die Verbindung aus Beispiel 3 bei einem Versuch bei einer Konzentration von 10 ppm einen Abtötungsgrad von 100 %.

Das erfindungsgemäße Verfahren (Variante (a) und (b)) soll durch die folgenden Herstellungsbeispiele erläutert werden.

## I. Methode nach Formelschema 1

### Beispiel 1

2,3-Dihydro-2,2-dimethyl-7-benzofuranyl-N-dimethoxyphosphonyl-carbonyl-N-methyl-carbamat

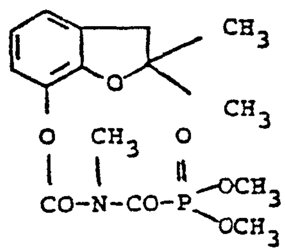

Zu 14,1 g 2,3-Dihydro-2,2-dimethyl-7-benzofuranyl-N-chlorcarbonylcarbamat werden langsam unter Rühren 6 ml Trimethylphosphit zugetropft. Die exotherme Reaktion wird mit externer Eiskühlung auf 20-30 °C gehalten. Nach Beendigung der Gasentwicklung werden im Wasserstrahlpumpenvakuum am Schluß bei 80 °C die flüchtigen Bestandteile entfernt. Als Rückstand bleibt ein zähes Öl. $^1$H-NMR in $DCCl_3$ : δ = 1,48 ppm (6 H, s, 2 $CH_3$), δ = 3,02 ppm (2 H, s, —$CH_2$), δ = 3,32 ppm (3 H, s, N—$CH_3$), δ = 3,86 ppm (6 H, d, J = 11,5 Hz, P (O—$CH_3$)$_2$, δ = 6,95 ppm (3 H, m, Aromatenprotonen).

Ausbeute 17,4 g (98 %)

Weitere nach dieser Methode synthetisierte Phosphonylcarbonylcarbamate sind in der folgenden Tabelle zusammengestellt.

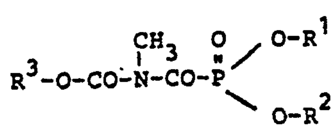

| Beispiel Nr. | $R^3$ | $R^1$ | $R^2$ | Ausbeute (% der Theorie) | |
|---|---|---|---|---|---|
| 2 | 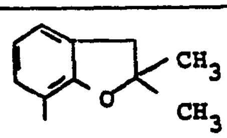 | $-C_2H_5$ | $-C_2H_5$ | 100 % | $n_D^{20}$ 1,5101 |
| 3 | 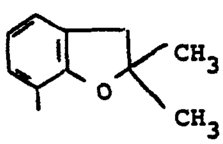 | $-CH_2-CH_2Cl$ | $-CH_2-CH_2Cl$ | 77 % | Fp: 114°C |

(Fortsetzung)

| Beispiel Nr. | $R^3$ | $R^1$ | $R^2$ | Ausbeute (% der Theorie) |
|---|---|---|---|---|
| 4 | 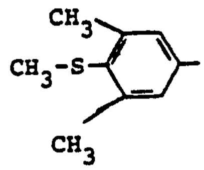 | $CH_3$ | $-CH_3$ | 87 % Fp: 88-89°C |
| 5 | 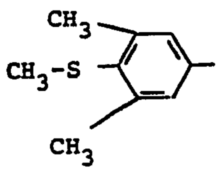 | $-C_2H_5$ | $-C_2H_5$ | 91 % Fp: 48-50°C |
| 6 | 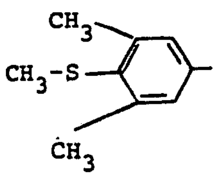 | $-CH_2-CH_2Cl$ | $-CH_2-CH_2Cl$ | 82 % $n_D^{20}$ = 1.4590 |
| 7 | 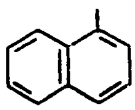 | $-CH_3$ | $CH_3$ | 77 % erstarrtes Öl |
| 8 | 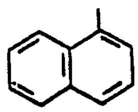 | $-CH_2-CH_3$ | $-CH_2-CH_3$ | 73 % Fp: 39-41°C |
| 9 | 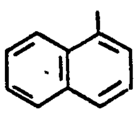 | $-CH_2-CH_2-Cl$ | $-CH_2-CH_2-Cl$ | 77 % $n_D^{20}$ = 1.5748 |
| 10 | 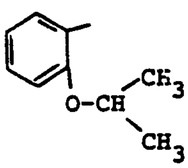 | $CH_3$ | $CH_3$ | 98 % $n_D^{20}$ = 1.5068 |
| 11 | 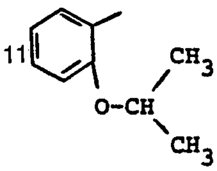 | $C_2H_5$ | $C_2H_5$ | 98 % $n_D^{20}$ = 1.4978 |
| 12 | 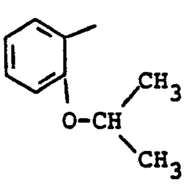 | $-CH_2-CH_2-Cl$ | $-CH_2-CH_2-Cl$ | 93 % $n_D^{20}$ = 1.5170 |

(Fortsetzung)

| Beispiel Nr. | $R^3$ | $R^1$ | $R^2$ | Ausbeute (% der Theorie) | |
|---|---|---|---|---|---|
| 13 | 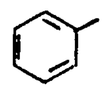 | $CH_3$ | $CH_3$ | 96 % | $n_D^{20}$ = 1.5176 |
| 14 | $CH_3$ | $CH_3$ | $CH_3$ | 66 % | Sdp. 118°C/0,08 mbar |

II. Methode nach Formelschema 2

Beispiel 15

O-(N-Dimethoxyphosphonylcarbonyl-N-methyl-carbamylhydroxam-thioessigsäure-S-methylester

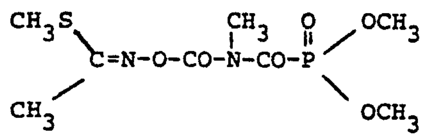

10,5 ml Bischorcarbonylmethylamin werden in 50 ml absolutem Ether oder Toluol vorgelegt und 11,75 ml Trimethylphosphit bei einer Temperatur von 10 °C zugetropft. Nach Beendigung der Zugabe wird 10 Minuten nachgerührt, anschließend 10,5 g Hydroxamthioessigsäure-S-methylester portionsweise eingetragen und 14 ml Triethylamin so zugetropft, daß die Reaktionstemperatur immer unter 10 °C bleibt. Nach zweistündigem Rühren wird das Reaktionsgemisch bei 5 °C mit 100 ml Wasser versetzt und mit dem eingesetzten Lösungsmittel mehrfach extrahiert. Nach dem Trocknen über Natriumsulfat, wird das Lösungsmittel im Vakuum entfernt und der Rückstand mit Diisopropylether angerieben. Man erhält so 4 g (13,5 %) Fp 88 °C.

Ber.: C 32,2 H 5,0 N 9,3 O 32,2
Gef.: C 32,4 H 5,2 N 9,2 O 31,6

Weitere nach dieser Methode gewonnene Phosphonylcarbonylcarbamate sind in der folgenden Tabelle zusammengestellt:

| Beispiel Nr. | $R^3$ | $R^1$ | $R^2$ | Ausbeute (% der Theorie) | |
|---|---|---|---|---|---|
| 16 | 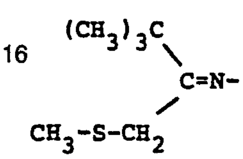 | $CH_3$ | $CH_3$ | 62 % | Fp: 90°C |
| 17 | 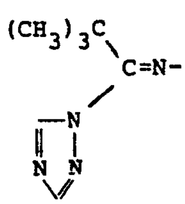 | $CH_3$ | $CH_3$ | 18 % | Fp: 102°C |

(Fortsetzung)

| Beispiel Nr. | $R^3$ | $R^1$ | $R^3$ | Ausbeute (% der Theorie) |
|---|---|---|---|---|
| 18 | 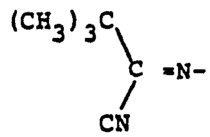 | $CH_3$ | $CH_3$ | 58 % Fp: 117°C |
| 19 | 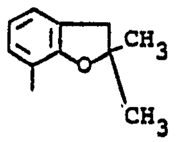 | $-CH_2-CH_2-Cl$ | $CH_2-CH_2-Cl$ | 60 % Fp: 112-113°C |

(Die Verbindung aus Beispiel 19 ist identisch mit der Verbindung aus Beispiel 3).

## Ansprüche

1. N-Phosphonylcarbonyl-N-methylcarbamidsäureester der Formel I

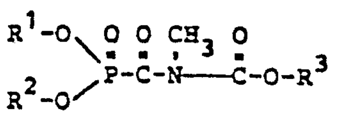

(I)

in welcher

$R^1$ und $R^2$ gleich oder verschieden sein können und für $C_1$-$C_8$-Alkyl, $C_2$-$C_6$-Alkenyl oder $C_2$-$C_6$-Alkinyl stehen, wobei diese Reste durch Halogen substituiert sein können und $R^3$ für $C_1$-$C_8$-Alkyl, Phenyl, Naphthyl, Benzodioxolanyl, Dihydrobenzofuranyl oder Indanyl steht, wobei diese Reste durch $C_1$-$C_8$-Alkyl, $C_2$-$C_6$-Alkenyl, $C_2$-$C_6$-Alkinyl, $C_1$-$C_6$-Alkoxy, $C_2$-$C_6$-Alkenoxy, $C_2$-$C_6$-Alkinoxy, $C_1$-$C_6$-Alkylthio, $C_2$-$C_6$-Alkenylthio, $C_2$-$C_6$-Alkinylthio, Dialkylamino mit 1 bis 4 C-Atomen je Alkylgruppe, $C_1$-$C_8$-Halogenalkyl, Halogen, Nitro, Cyano, $C_3$-$C_7$-Cycloalkyl, Formamidino, Dioxanyl und/oder Dioxolanyl substituiert sein können oder

$R^3$ für einen Rest der Formel Ia steht

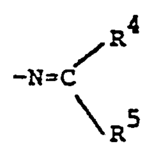

(Ia)

in welcher

$R^4$ und $R^5$ gleich oder verschieden sein können und für $C_1$-$C_8$-Alkyl, $C_1$-$C_6$-Alkoxy, $C_1$-$C_6$-Alkylthio, $C_2$-$C_4$-Alkylthioalkyl, Cyano, $C_2$-$C_6$-Alkoxycarbonyl, Dialkylcarbamoyl mit 1 bis 4 C-Atomen je Alkylgruppe, Dialkoxyphosphonyl mit 1 bis 4 C-Atomen je Alkylgruppe, oder Triazolyl stehen und wobei $R^4$ und $R^5$ weiterhin gemeinsam mit dem C-Atom, an welches sie gebunden sind, einen gegebenenfalls durch Methyl oder Phenyl substituierten Dithiolan-, Dithian-, Oxathiolan- oder Oxathianring bilden können.

2. N-Phosphonylcarbonyl-N-methylcarbamidsäureester gemäß Anspruch 1, in welcher

$R^1$ und $R^2$ gleich oder verschieden sein können und für geradkettiges oder verzweigtes Alkyl mit 1-8 C-Atomen, für Alkenyl mit 3-6 C-Atomen oder für Alkinyl mit 3-6 C-Atomen steht, wobei $R^1$ und $R^2$ durch 1-3 Halogenatome substituiert sein können und

$R^3$ für Methyl, Phenyl, Naphthyl, Benzodioxolanyl, Dihydrobenzfuranyl oder Indanyl steht, wobei diese Reste durch Alkyl, Alkenyl, Alkinyl, Alkoxy, Alkenoxy, Alkinoxy, Alkylthio, Alkenylthio, Alkinylthio,

Dialkylamino mit jeweils bis zu 4 C-Atomen Trihalogenmethyl, Halogen, Nitro, Cyano, $C_3$-$C_7$-Cycloalkyl, Formamidino, Dioxanyl, Dioxolanyl substituiert sein können oder $R^3$ für den Rest der Formel

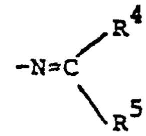

steht,
in welcher
$R^4$ und $R^5$ gleich oder verschieden sein können und für Alkyl, Alkoxy oder Alkylthio mit jeweils 1 bis 4 Kohlenstoffatomen, Cyano, Alkoxycarbonyl oder Alkylthioalkyl mit 2 bis 4 Kohlenstoffatomen, Dialkylcarbamoyl oder Dialkoxyphosphoryl mit 1 bis 4 Kohlenstoffatomen je Alkylgruppe oder für Triazolyl stehen und wobei $R^4$ und $R^5$ gemeinsam mit dem C-Atom, an welches sie gebunden sind, einen gegebenenfalls durch Methyl oder Phenyl substituierten Dithiolan-, Dithian-, Oxathiolan- oder Oxathianring bilden können.

3. N-Phosphonylcarbonyl-N-methylcarbamate gemäß Anspruch 1, in welcher

$R^1$ und $R^2$ für Methyl, Ethyl-, 2-Chlorethyl, Octyl, Allyl oder Propargyl stehen, und

$R^3$ für Methyl oder Phenyl, das gegebenenfalls durch Alkyl mit 1 bis 3 C-Atomen, Alkoxy mit 1 bis 3 C-Atomen, Methylthio, Dioxolanyl und oder methylsubstituiertes Dioxolanyl substituiert ist, steht, oder für Benzodioxolanyl oder Dihydrobenzofuranyl steht, wobei diese Reste gegebenenfalls durch Methyl substituiert sind und $R^3$ weiterhin für Naphthyl oder den Iminorest der Formel

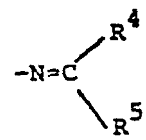

steht,
worin
$R^4$ und $R^5$ für Alkyl mit 1 bis 4 C-Atomen, Alkylthioalkyl mit 2 bis 4 Kohlenstoffatomen, für Methylthio, Cyano, Dimethylaminocarbonyl oder Ethoxycarbonyl stehen oder worin $R^4$ und $R^5$ gemeinsam mit dem C-Atom, an welches sie gebunden sind, einen Dithiolanring bilden.

4. N-Phosphonylcarbonyl-N-methylcarbamat der Formel

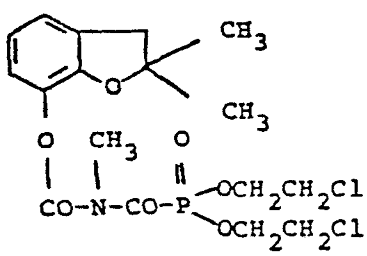

5. Verfahren zur Herstellung von N-Phosphonylcarbonyl-N-methylcarbamidsäureester der Formel

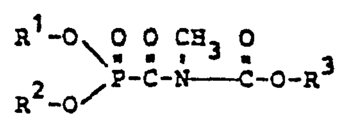

in welcher
$R^1$ und $R^2$ gleich oder verschieden sein können und für $C_1$-$C_8$-Alkyl, $C_2$-$C_6$-Alkenyl oder $C_2$-$C_6$-Alkinyl stehen, wobei diese Reste durch Halogen substituiert sein können und $R^3$ für $C_1$-$C_8$-Alkyl, Phenyl, Naphthyl, Benzodioxolanyl, Dihydrobenzofuranyl oder Indanyl steht, wobei diese Reste durch $C_1$-$C_8$-Alkyl, $C_2$-$C_6$-Alkenyl, $C_2$-$C_6$-Alkinyl, $C_1$-$C_6$-Alkoxy, $C_2$-$C_6$-Alkenoxy, $C_2$-$C_6$-Alkinoxy, $C_1$-$C_6$-Alkylthio, $C_2$-$C_6$-Alkenylthio, $C_2$-$C_6$-Alkinylthio, Dialkylamino mit 1 bis 4 C-Atomen je Alkylgruppe, $C_1$-$C_8$-Halogenalkyl, Halogen, Nitro, Cyano, $C_3$-$C_7$-Cycloalkyl, Formamidino, Dioxanyl und/oder Dioxolanyl substituiert sein können oder

$R^3$ für einen Rest der Formel Ia steht

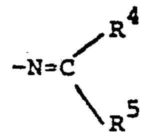

(Ia)

in welcher

$R^4$ und $R^5$ gleich oder verschieden sein können und für $C_1$-$C_8$-Alkyl, $C_1$-$C_6$-Alkoxy, $C_1$-$C_6$-Alkylthio, $C_2$-$C_4$-Alkylthioalkyl, Cyano, $C_2$-$C_6$-Alkoxycarbonyl, Dialkylcarbamoyl mit 1 bis 4 C-Atomen je Alkylgruppe, Dialkoxyphosphonyl mit 1 bis 4 C-Atomen je Alkylgruppe, oder Triazolyl stehen und wobei $R^4$ und $R^5$ weiterhin gemeinsam mit dem C-Atom, an welches sie gebunden sind, einen gegebenenfalls durch Methyl oder Phenyl substituierten Dithiolan-, Dithian-, Oxathiolan- oder Oxathianring bilden können, dadurch gekennzeichnet, daß man

a) N-Chlorcarbonyl-N-methylcarbamidsäureester der Formel II

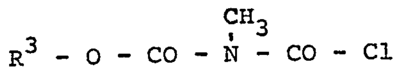

(II)

in welcher

$R^3$ die oben angegebene Bedeutung hat, mit Phosphiten der Formel

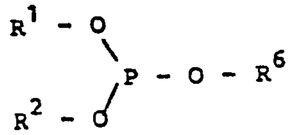

(III)

in welcher

$R^1$ und $R^2$ die obenangegebene Bedeutung haben und

$R^6$ für $C_1$-$C_8$-Alkyl, $C_2$-$C_6$-Alkenyl oder $C_2$-$C_6$-Alkinyl steht, wobei diese Gruppen durch Halogen substituiert sein können und wobei $R^1$, $R^2$ und $R^6$ gleich oder verschieden sein können, gegebenenfalls in Gegenwart eines Verdünnungsmittels umsetzt oder

b) Phosphite der Formel III mit Bischlor-carbonyl-N-methylamin der Formel IV

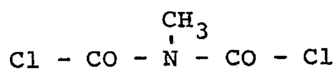

(IV)

und Hydroxylverbindungen der Formel V

$$R^3—OH \qquad (V)$$

in welcher

$R^3$ die oben angegebene Bedeutung hat, gegebenenfalls in Gegenwart eines säurebindenden Mittels und/oder eines Verdünnungsmittels umsetzt.

6. Verwendung von Verbindungen der Formel I zur Bekämpfung von Schädlingen.

7. Verwendung von Verbindungen der Formel I zur Bekämpfung von Insekten.

8. Schädlingsbekämpfungsmittel, gekennzeichnet durch den Gehalt an wenigstens einer Verbindung der Formel I.

9. Verfahren zur Herstellung von Schädlingsbekämpfungsmitteln gemäß Anspruch 8, dadurch gekennzeichnet, daß man wenigstens eine Verbindung gemäß Formel I mit Streckmitteln, Träger- und Verdünnungsstoffen, Füllstoffen, Treibgasen. Oberflächenaktiven Stoffen, Formulierhilfsmittelns und gegebenenfalls anderen Schädlingsbekämpfungsmitteln, welche auch in formulierter Form vorliegen können, mischt.

**Claims**

1. N-Phosphonylcarbonyl-N-methylcarbamic acid esters of the formula I

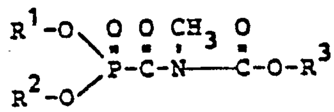

(I)

in which

$R^1$ and $R^2$ can be identical or different and represent $C_1$-$C_8$-alkyl, $C_2$-$C_6$-alkenyl or $C_2$-$C_6$-alkinyl, it being possible for these radicals to be substituted by halogen, and

$R^3$ represents $C_1$-$C_8$-alkyl, phenyl, naphthyl, benzodioxolanyl, dihydrobenzofuranyl or indanyl, it being possible for these radicals to be substituted by $C_1$-$C_8$-alkyl, $C_2$-$C_6$-alkenyl, $C_2$-$C_6$-alkinyl, $C_1$-$C_6$-alkoxy, $C_2$-$C_6$-alkenoxy, $C_2$-$C_6$-alkinoxy, $C_1$-$C_6$-alkylthio, $C_2$-$C_6$-alkenylthio, $C_2$-$C_6$-alkinylthio, dialkylamino with 1 to 4 C atoms per alkyl group, $C_1$-$C_8$-halogenoalkyl, halogen, nitro, cyano, $C_3$-$C_7$-cycloalkyl, formamidino, dioxanyl and/or dioxolanyl, or

$R^3$ represents a radical of the formula Ia

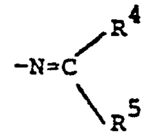

(Ia)

in which

$R^4$ and $R^5$ can be identical or different and represent $C_1$-$C_8$-alkyl, $C_1$-$C_6$-alkoxy, $C_1$-$C_6$-alkylthio, $C_2$-$C_4$-alkylthioalkyl, cyano, $C_2$-$C_6$-alkoxycarbonyl, dialkylcarbamoyl with 1 to 4 C atoms per alkyl group, dialkoxyphosphonyl with 1 to 4 C atoms per alkyl group or triazolyl, and wherein $R_4$ and $R^5$, together with the C atom to which they are bonded, can also form a dithiolane, dithiane, oxathiolane or oxathiane ring which is optionally substituted by methyl or phenyl.

2. N-Phosphonylcarbonyl-N-methylcarbamic acid esters according to Claim 1, in which

$R^1$ and $R^2$ can be identical or different and represent straight-chain or branched alkyl with 1-8 C atoms, alkenyl with 3-6 C atoms or alkinyl with 3-6 C atoms, it being possible for $R^1$ and $R^2$ to be substituted by 1-3 halogen atoms, and

$R^3$ represents methyl, phenyl, naphthyl, benzodioxolanyl, dihydrobenzofuranyl or indanyl, it being possible for these radicals to be substituted by alkyl, alkenyl, alkinyl, alkoxy, alkenoxy, alkinoxy, alkylthio, alkenylthio, alkinylthio or dialkylamino with in each case up to 4 C atoms, or by trihalogenomethyl, halogen, nitro, cyano, $C_3$-$C_7$-cycloalkyl, formamidino, dioxanyl or dioxolanyl, or $R^3$ represents the radical of the formula

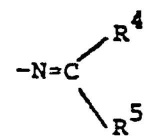

in which

$R^4$ and $R^5$ can be identical or different and represent alkyl, alkoxy or alkylthio, with in each case 1 to 4 carbon atoms, cyano, alkoxycarbonyl or alkylthioalkyl with 2 to 4 carbon atoms, dialkylcarbamoyl or dialkoxyphosphoryl with 1 to 4 carbon atoms per alkyl group, or triazolyl and wherein $R^4$ and $R^5$, together with the C atom to which they are bonded, can form a dithiolane, dithiane, oxathiolane or oxathiane ring which is optionnally substituted by methyl or phenyl.

3. N-Phosphonylcarbonyl-N-methylcarbamates according to Claim 1, in which

$R^1$ and $R^2$ represent methyl, ethyl, 2-chloroethyl, octyl, allyl or propargyl and

$R^3$ represents methyl, or phenyl which is optionally substituted by alkyl with 1 to 3 C atoms, alkoxy with 1 to 3 C atoms, methylthio, dioxolanyl and/or methyl-substituted dioxolanyl, or represents benzodioxolanyl or dihydrobenzofuranyl, these radicals being optionally substituted by methyl, and $R^3$ furthermore represents naphthyl or the imino radical of the formula

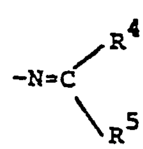

wherein

$R^4$ and $R^5$ represent alkyl with 1 to 4 C atoms, alkylthioalkyl with 2 to 4 carbon atoms, methylthio, cyano, dimethylaminocarbonyl or ethoxycarbonyl, or wherein $R^4$ and $R^5$, together with the C atom to which they are bonded form a dithiolane ring.

4. N-Phosphonylcarbonyl-N-methylcarbamate of the formula

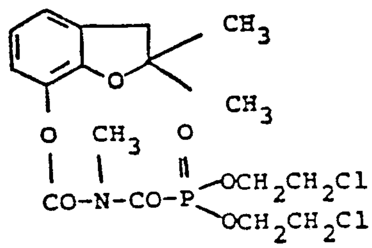

5. Process for the preparation of N-phosphonylcarbonyl-N-methylcarbamic acid esters of the formula

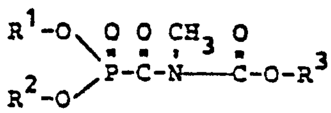

in which

$R^1$ and $R^2$ can be identical or different and represent $C_1$-$C_8$-alkyl, $C_2$-$C_6$-alkenyl or $C_2$-$C_6$-alkinyl, it being possible for these radicals to be substituted by halogen, and $R^3$ represents $C_1$-$C_8$-alkyl, phenyl, naphthyl, benzodioxolanyl, dihydrobenzofuranyl or indanyl, it being possible for these radicals to be substituted by $C_1$-$C_8$-alkyl, $C_2$-$C_6$-alkenyl, $C_2$-$C_6$-alkinyl, $C_1$-$C_6$-alkoxy, $C_2$-$C_6$-alkenoxy, $C_2$-$C_6$-alkinoxy, $C_1$-$C_6$-alkylthio, $C_2$-$C_6$-alkenylthio, $C_2$-$C_6$-alkinylthio, dialkylamino with 1 to 4 C atoms per alkyl group, $C_1$-$C_8$-halogenoalkyl, halogen, nitro, cyano, $C_3$-$C_7$-cycloalkyl, formamidino, dioxanyl and/or dioxolanyl, or

$R^3$ represents a radical of the formula Ia

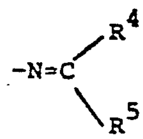 (Ia)

in which

$R^4$ and $R^5$ can be identical or different and represent $C_1$-$C_8$-alkyl, $C_1$-$C_6$-alkoxy, $C_1$-$C_6$-alkylthio, $C_2$-$C_4$-alkylthioalkyl, cyano, $C_2$-$C_6$-alkoxycarbonyl, dialkylcarbamoyl with 1 to 4 C atoms per alkyl group, dialkoxyphosphonyl with 1 to 4 C atoms per alkyl group or triazolyl, and wherein $R^4$ and $R^5$, together with the C atom to which they are bonded, can also form a dithiolane, dithiane, oxathiolane or oxathiane ring which is optionally substituted by methyl or phenyl, characterised in that

a) N-chlorocarbonyl-N-methylcarbamic acid esters of the formula II

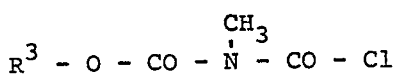 (II)

in which

$R^3$ has the meaning given above, are reacted with phosphites of the formula

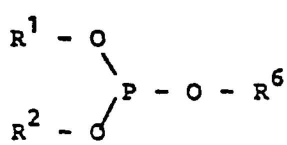 (III)

in which

$R^1$ and $R^2$ have the meaning given above and

$R^6$ represents $C_1$-$C_8$-alkyl, $C_2$-$C_6$-alkenyl or $C_2$-$C_6$-alkinyl, it being possible for these groups to be substituted by halogen, and wherein $R^1$, $R^2$ and $R^6$ can be identical or different, if appropriate in the presence of a diluent, or

b) phosphites of the formula III are reacted with bischloro-carbonyl-N-methylamine of the formula IV

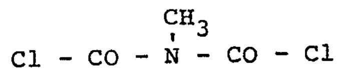

(IV)

and hydroxyl compounds of the formula V

$$R^3—OH \quad (V)$$

in which

$R^3$ has the meaning given above, if appropriate in the presence of an acid-binding agent and/or of a diluent.

6. Use of compounds of the formula I for combating pests.

7. Use of compounds of the formula I for combating insects.

8. Agents for combating pests, characterised in that they contain at least one compound of the formula I.

9. Process for the preparation of pest-combating agents according to Claim 8, characterised in that at least one compound according to formula I is mixed with extenders, carriers and diluents, fillers, propellants, surface-active substances, formulation auxiliaries and, if appropriate, other pest-combating agents, which can also be in the form of a formulation.

**Revendications**

1. Esters d'acides N-phosphonylcarbonyl-N-méthylcarbamiques de formule I

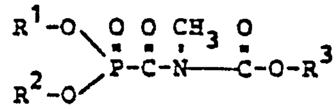

dans laquelle

$R^1$ et $R^2$ peuvent être égaux ou différents et représentent des restes alkyle en $C_1$ à $C_8$, alcényle en $C_2$ à $C_6$ ou alcynyle en $C_2$ à $C_6$, ces restes pouvant être substitués par un halogène, et $R^3$ désigne un reste alkyle en $C_1$ à $C_8$, phényle, naphtyle, benzodioxolanyle, dihydrobenzofurannyle ou indanyle, ces restes pouvant être substitués par un groupe alkyle en $C_1$ à $C_8$, alcényle en $C_2$ à $C_6$, alcynyle en $C_2$ à $C_6$, alkoxy en $C_1$ à $C_6$, alcénoxy en $C_2$ à $C_6$, alcynoxy en $C_2$ à $C_6$, alkylthio en $C_1$ à $C_6$, alcénylthio en $C_2$ à $C_6$, alcynylthio en $C_2$ à $C_6$, dialkylamino ayant 1 à 4 atomes de carbone par groupe alkyle, halogénalkyle en $C_1$ à $C_8$, halogéno, nitro, cyano, cycloalkyle en $C_3$ à $C_7$, formamidino, dioxanyle et/ou dioxolanyle ou bien

$R^3$ représente un reste de formule Ia

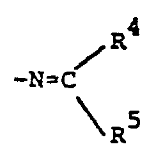

(Ia)

dans laquelle

$R^4$ et $R^5$ peuvent être égaux ou différents et représentent un groupe alkyle en $C_1$ à $C_8$, alkoxy en $C_1$ à $C_6$, alkylthio en $C_1$ à $C_6$, alkylthioalkyle en $C_2$ à $C_4$, cyano, alkoxycarbonyle en $C_2$ à $C_6$, dialkylcarbamoyle ayant 1 à 4 atomes de carbone par groupe alkyle, dialkoxyphosphonyle ayant 1 à 4 atomes de carbone par groupe alkyle ou triazolyle et $R^4$ et $R^5$ peuvent en outre former conjointement avec l'atome de carbone auquel ils sont liés, un noyau de dithiolane, dithiane, oxathiolane ou oxathiane éventuellement substitué par un radical méthyle ou phényle.

2. Esters d'acide N-phosphonylcarbonyl-N-méthylcarbamique suivant la revendication 1 , dans lesquels

$R^1$ et $R^2$ peuvent être égaux ou différents et représentent un groupe alkyle à chaîne droite ou ramifiée ayant 1 à 8 atomes de carbone, un groupe alcényle ayant 3 à 6 atomes de carbone ou un groupe alcynyle ayant 3 à 6 atomes de carbone, $R^1$ et $R^2$ pouvant être substitués par 1 à 3 atomes d'halogènes et

$R^3$ représente un reste méthyle, phényle, naphtyle, benzodioxolanyle, dihydrobenzofurannyle ou indanyle, ces restes pouvant être substitués par un radical alkyle, alcényle, alcynyle, alkoxy, alcénoxy, alcynoxy, alkylthio, alcénylthio, alcynylthio, dialkylamino ayant chacun jusqu'à 4 atomes de carbone, un groupe trihalogénométhyle, un halogène, un groupe nitro, cyano, cycloalkyle en $C_3$ à $C_7$, formamidino, dioxanyle, dioxolanyle ou bien $R^3$ représente le reste de formule

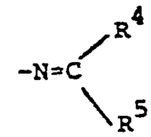

dans laquelle

$R^4$ et $R^5$ peuvent être égaux ou différents et représentent un groupe alkyle, alkoxy ou alkylthio ayant chacun 1 à 4 atomes de carbone, cyano, alkoxycarbonyle ou alkylthioalkyle ayant 2 à 4 atomes de carbone, dialkylcarbamoyle ou dialkoxyphosphoryle ayant 1 à 4 atomes de carbone par groupe alkyle ou un groupe triazolyle et $R^4$ et $R^5$ peuvent former conjointement avec l'atome de carbone auquel ils sont liés, un noyau de dithiolane, dithiane, oxathiolane ou oxathiane éventuellement substitué par un radical méthyle ou phényle.

3. N-phosphonylcarbonyl-N-méthylcarbamates suivant la revendication 1, dans lesquels

$R^1$ et $R^2$ représentent un groupe méthyle, éthyle, 2-chloréthyle, octyle, allyle ou propargyle et

$R^3$ est un groupe méthyle ou phényle qui est éventuellement substitué par un radical alkyle ayant 1 à 3 atomes de carbone, alkoxy ayant 1 à 3 atomes de carbone, méthylthio, dioxolanyle ou dioxolanyle à substituant méthyle, ou un reste benzodioxolanyle ou dihydrobenzofurannyle, ces restes étant éventuellement substitués par un radical méthyle et $R^3$ représentant en outre un reste naphtyle ou le reste imino de formule

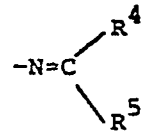

dans laquelle

$R^4$ et $R^5$ représentent un groupe alkyle ayant 1 à 4 atomes de carbone, alkylthioalkyle ayant 2 à 4 atomes de carbone, un groupe méthylthio, cyano, diméthylaminocarbonyle ou éthoxycarbonyle ou bien $R^4$ et $R^5$ peuvent former un noyau de dithiolane conjointement avec l'atome de carbone auquel ils sont liés.

4. Le N-phosphonylcarbonyl-N-méthylcarbamate de formule

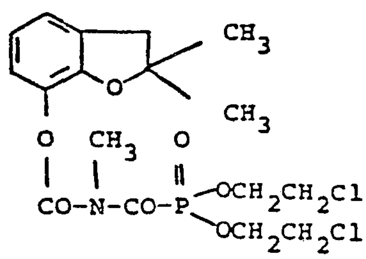

5. Procédé de production d'esters d'acide N-phosphonylcarbonyl-N-méthylcarbamique de formule

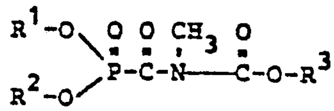

dans laquelle

$R^1$ et $R^2$ peuvent être égaux ou différents et représentent des restes alkyle en $C_1$ à $C_8$, alcényle en $C_2$ à $C_6$ ou alcynyle en $C_2$ à $C_6$, ces restes pouvant être substitués par un halogène, et $R^3$ désigne un reste alkyle en $C_1$ à $C_8$, phényle, naphtyle, benzodioxolanyle, dihydrobenzofurannyle ou indanyle, ces restes pouvant être substitués par un groupe alkyle en $C_1$ à $C_8$, alcényle en $C_2$ à $C_6$, alcynyle en $C_2$ à $C_6$, alkoxy en $C_1$ à $C_6$, alcénoxy en $C_2$ à $C_6$, alcynoxy en $C_2$ à $C_6$, alkylthio en $C_1$ à $C_6$, alcénylthio en $C_2$ à $C_6$, alcynylthio en $C_2$ à $C_6$, dialkylamino ayant 1 à 4 atomes de carbone par groupe alkyle, halogénalkyle en $C_1$ à $C_8$, halogéno, nitro, cyano, cycloalkyle en $C_3$ à $C_7$, formamidino, dioxanyle et/ou dioxolanyle ou bien

$R^3$ représente un reste de formule Ia

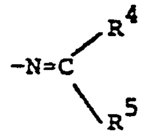

(Ia)

dans laquelle

$R^4$ et $R^5$ peuvent être égaux ou différents et représentent un groupe alkyle en $C_1$ à $C_8$, alkoxy en $C_1$ à $C_8$, alkylthio en $C_1$ à $C_8$, alkylthioalkyle en $C_2$ à $C_4$, cyano, alkoxycarbonyle en $C_2$ à $C_8$, dialkylcarbamoyle ayant 1 à 4 atomes de carbone par groupe alkyle, dialkoxyphosphonyle ayant 1 à 4 atomes de carbone par groupe alkyle ou triazolyle et $R^4$ et $R^5$ peuvent en outre former conjointement avec l'atome de carbone auquel ils sont liés, un noyau de dithiolane, dithiane, oxathiolane ou oxathiane éventuellement substitué par un radical méthyle ou phényle, caractérisé en ce que

a) on fait réagir des esters d'acide N-chlorocarbonyl-N-méthylcarbamique de formule II

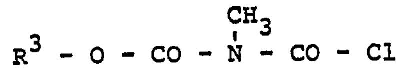

(II)

dans laquelle

$R^3$ a la définition indiquée ci-dessus, avec des phosphites de formule

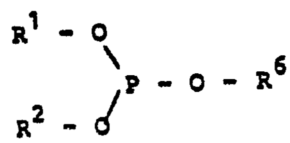

(III)

dans laquelle

$R^1$ et $R^2$ ont la définition indiquée ci-dessus et

$R^6$ est un groupe alkyle en $C_1$ à $C_8$, alcényle en $C_2$ à $C_6$ ou alcynyle en $C_2$ à $C_6$, ces groupes pouvant être substitués par un halogène et $R^1$, $R^2$ et $R^6$ pouvant être égaux ou différents, le cas échéant en présence d'un diluant, ou bien

b) on fait réagir des phosphites de formule III avec la bischlorocarbonyl-N-méthylamine de formule IV

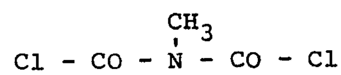

(IV)

et des composés hydroxyliques de formule V

$$R^3—OH \qquad (V)$$

dans laquelle

$R^3$ a la définition indiquée ci-dessus, éventuellement en présence d'un accepteur d'acide et/ou d'un diluant.

6. Utilisation de composés de formule I pour combattre les parasites.

7. Utilisation de composés de formule I pour combattre des insectes.

8. Compositions pesticides, caractérisées par une teneur en au moins un composé de formule I.

9. Procédé de production de compositions pesticides suivant la revendication 8, caractérisé en ce qu'on mélange au moins un composé de formule I avec des substances destinées à étendre, des supports et des diluants, des charges, des gaz propulseurs ou des agents tensio-actifs, des adjuvants de formulation et, le cas échéant, d'autres pesticides, qui peuvent aussi être présents à l'état formulé.